**Europäisches Patentamt**

**European Patent Office**

**Office européen des brevets**

(19)

(11) Veröffentlichungsnummer: **0 137 220**
**A1**

# (12) EUROPÄISCHE PATENTANMELDUNG

(21) Anmeldenummer: **84109635.7**

(22) Anmeldetag: **13.08.84**

(51) Int. Cl.⁴: **H 05 B 1/02**
**G 05 D 23/32**

(30) Priorität: **15.08.83 NO 832920**

(43) Veröffentlichungstag der Anmeldung:
**17.04.85 Patentblatt 85/16**

(84) Benannte Vertragsstaaten:
**FR SE**

(71) Anmelder: **Siemens Aktiengesellschaft
Berlin und München Wittelsbacherplatz 2
D-8000 München 2(DE)**

(72) Erfinder: **Amundsen, Aage
Skytterveien 26
N-7080 Heimdal(NO)**

(54) Schaltungsanordnung zum Steuern von Thermostaten in Heizgeräten.

(57) Zur Steuerung von Thermostaten (TH) in Heizgeräten (H), die an verschiedenen Phasen eines Mehrphasennetzes anschließbar sind, wird ein Temperaturänderungselement (TE) angeordnet, das den Thermostaten (TH) aufheizt. Das Temperaturänderungselement (TE) enthält ein bipolares spannungsabhängiges Element (V), das vorzugsweise als Varistor ausgebildet ist. Alle Temperaturänderungselement sind an einer gemeinsamen Steuerleitung (C) angeschlossen. Bei geöffnetem Schalter (SW) wird nur eine geringfügige und bei geschlossenem Schalter (SW) wird eine wesentliche Aufheizung des Thermostaten (TH) bewirkt.

FIG 1

Siemens Aktiengesellschaft          Unser Zeichen
Berlin und München                  VPA 83 P 7702 E

Schaltungsanordnung zum Steuern von Thermostaten in Heizgeräten

Die Erfindung bezieht sich auf eine Schaltungsanordnung
zum Steuern von Thermostaten in Heizgeräten entsprechend
dem Oberbegriff des Patentanspruchs 1.

Aus der NO-PS 13 80 11 ist es bekannt, bei Heizgeräten,
die an unterschiedlichen Phasen eines Mehrphasennetzes
angeschlossen sind, in der Nähe eines Thermostaten ein
zusätzliches Temperaturänderungselement anzuordnen, um,
beispielsweise zum Zwecke der Nachtabsenkung der Raumtemperatur einen im Heizgerät vorhandenen Thermostaten zusätzlich aufzuheizen. Das Temperaturänderungselement besteht aus einer Serienschaltung aus einem Widerstand und
einer Diode. Dieses Temperaturänderungselement ist einerseits an einer für alle Heizgeräte gemeinsamen Steuerleitung und über eine Schaltstufe an einer bestimmten Phase
oder am Nulleiter des Mehrphasennetzes und andererseits
an einer anderen Phase des Mehrphasennetzes angeschlossen. Wenn ein in der Schaltstufe vorhandener Schalter geschlossen wird, fließt ein Gleichstrom durch die Temperaturänderungselemente und den zugeordneten Thermostaten
wird eine höhere Temperatur vorgetäuscht, so daß die von
den Heizgeräten abgegebene Wärme vermindert wird und damit die Raumtemperatur abgesenkt wird. Durch die Dioden
in den Temperaturänderungselementen werden unerwünschte
Ströme von einer Phase zu einer anderen Phase des Mehrphasennetzes bei geöffnetem Schalter verhindert.

Bei dieser bekannten Schaltungsanordnung besteht die Ge-

Ret 1 Fra / 21.05.1984

fahr, daß im Störungsfall infolge der Gleichströme durch die Dioden Fehlerstromschutzschalter nicht zuverlässig ansprechen.

Der Erfindung liegt daher die Aufgabe zugrunde, eine Schaltungsanordnung zum Steuern von Thermostaten in Heizgeräten anzugeben, bei deren Verwendung auch im Störungsfall ein sicheres Ansprechen von Fehlerstromschutzschaltern gewährleistet ist.

Erfindungsgemäß wird die Aufgabe bei der Schaltungsanordnung der eingangs genannten Art durch die im kennzeichnenden Teil des Patentanspruchs 1 angegebenen Merkmale gelöst.

Die Schaltungsanordnung gemäß der Erfindung hat den Vorteil, daß sie wenige Bauteile aufweist und damit kostengünstig herstellbar ist.

Bei der Verwendung eines geeigneten bipolaren spannungsabhängigen Widerstands kann auf den zusätzlichen Temperaturänderungswiderstand im Temperaturänderungselement verzichtet werden. Falls ein derartiger spannungsabhängiger Widerstand jedoch nicht zur Verfügung steht, ist es zweckmäßig, das Temperaturänderungselement als eine Serienschaltung aus dem spannungsabhängigen Widerstand und dem Temperaturänderungswiderstand auszubilden.

Im folgenden wird ein Ausführungsbeispiel der Schaltungsanordnung gemäß der Erfindung anhand von Zeichnungen näher erläutert. Es zeigen

Fig. 1 ein Schaltbild von mehreren an ein Mehrphasennetz ohne Nulleiter angeschlossenen Heizgeräten,

Fig. 2 ein erstes Schaltbild von mehreren an ein Mehrphasennetz mit Nulleiter angeschlossenen Heizgeräten,

Fig. 3 ein zweites Schaltbild von mehreren an ein Mehrphasennetz mit Nulleiter angeschlossenen Heizgeräten.


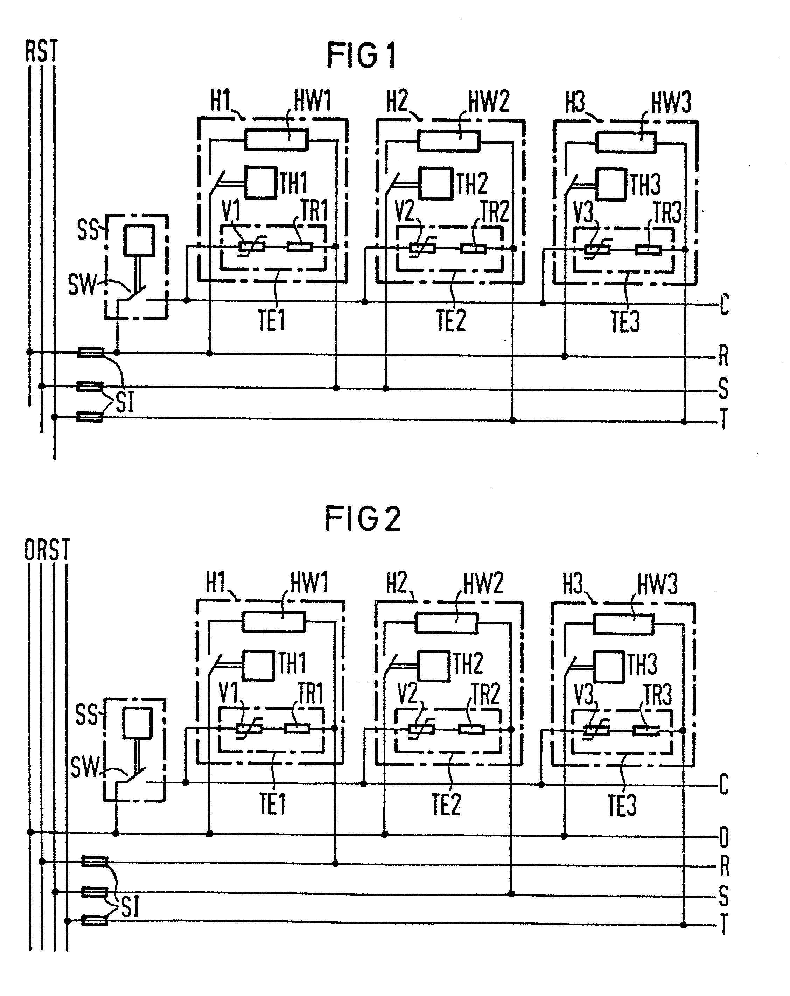

Bei dem in der Fig. 1 dargestellten Schaltbild sind mehrere Heizgeräte H1 bis H3 an verschiedenen Phasen eines
Mehrphasennetzes mit den Phasen R, S und T angeschlossen,
die durch Sicherungen SI abgesichert sind.


Jedes Heizgerät H enthält einen Heizwiderstand HW, der
über einen Thermostaten T4 in Abhängigkeit von der gewünschten Raumtemperatur ein- oder ausgeschaltet wird.
Zusätzlich enthält jedes Heizgerät H ein Temperaturänderungselement TE, mit dessen Hilfe nach dem Betätigen
eines Schalters SW in einer Schaltstufe SS die Raumtemperatur abgesenkt werden kann. In der Schaltstufe SS kann
beispielsweise eine Schaltuhr vorgesehen sein, die den
Schalter S während der Nacht schließt, um eine Nachtabsenkung der Raumtemperatur herbeizuführen. Das Temperaturelement TE in jedem Heizgerät H ist einerseits an
einer mit dem Schalter SW verbundenen Steuerleitung C und
andererseits an einer Phase angeschlossen, an der auch
das entsprechende Heizgerät H angeschlossen ist und die
von derjenigen Phase verschieden ist, die über den Schalter SW mit der Steuerleitung C verbindbar ist, falls das
Dreiphasennetz keinen Nulleiter aufweist. Falls ein Nullleiter vorhanden ist, ist die Steuerleitung C über den
Schalter SW mit diesem Nulleiter verbindbar.


Das Temperaturänderungselement TE enthält einen spannungsabhängigen nichtlinearen Widerstand, vorzugsweise einen
Varistor V und einen Temperaturänderungswiderstand TR.
Beide, oder wenigstens einer von diesen Komponenten sind
so angebracht, daß eine gute thermische Verbindung zu dem
Fühlerorgan des Thermostates besteht.


Als Varistor wird beispielsweise ein allgemein bekannter Metalloxidvaristor verwendet, der unter der Bezeichnung SIOV-S14K14 im Handel erhältlich ist. Ein derartiger Varistor hat eine symmetrische Spannungsstromkennlinie, deren Widerstandswert mit steigender Spannung abnimmt und deren Nichtlinearitätsexponent Werte über 30 erreicht. Damit wird eine Ansprechsteilheit von Zenerdioden erreicht.

Wenn zur Nachtabsenkung in den durch die Heizgeräte H beheizten Räumen der Schalter SW geschlossen wird, fließt beim Heizgerät H1 ein Strom zwischen den Phasen S und R über den Schalter SW, die Steuerleitung C und das Temperaturänderungselement TE1. Die Spannung am Varistor V1 ist so groß, daß dieser einen geringen Widerstand aufweist. Der Temperaturänderungswiderstand TR1 wird damit aufgeheizt und dem in seiner unmittelbaren Nähe befindlichen Thermostaten TH wird eine Erhöhung der Raumtemperatur vorgetäuscht, so daß dieser den Stromkreis des Heizwiderstands HW1 unterbricht und damit die Raumtemperatur absenkt. In entsprechender Weise fließt bei den Heizgeräten H2 und H3 jeweils ein Strom zwischen den Phasen T und R über die Temperaturänderungselemente TE2 bzw. TE3, über die Steuerleitung C und über den Schalter SW. Auch hier werden die Temperaturänderungswiderstände TR2 bzw. TR3 aufgeheizt, um dem jeweiligen Thermostaten TH2 bzw. TH3 eine höhere Raumtemperatur vorzutäuschen.

Wenn der Schalter SW geöffnet ist, liegt an den Temperaturänderungselementen TE eine Spannung an, die kleiner ist als die Spannung bei einem geschlossenen Schalter SW, so daß infolge der Kennlinie der Varistoren V ein sehr kleiner Strom durch die Temperaturänderungswiderstände TR fließt und damit den Thermostaten TH keine höhere Raumtemperaturen vorgetäuscht werden. Die kleinen Ströme fließen bei dem dargestellten Beispiel zwischen den Phasen T und S über die parallelgeschalteten Temperaturänderungselemente TE2 und TE3, über die Steuerleitung C und über das Temperaturänderungselement TE1.

Die Ströme sind in jedem Fall Wechselströme, so daß im Störungsfall gegebenenfalls ein Fehlerstromschutzschalter anspricht.

Falls die von den Varistoren V abgegebene Wärme ausreicht, um die Thermostaten TH aufzuheizen, sind die Temperaturänderungswiderstände TR nicht erforderlich. In diesem Fall erfordert die Schaltungsanordnung einen besonders geringen Aufwand.

Bei dem in Fig. 2 dargestellten ersten Schaltbild von mehreren an einem Mehrphasennetz mit Nulleiter angeschlossenen Heizgeräten H sind diese jeweils zwischen dem Nulleiter und einer der Phasen R, S oder T angeschlossen.

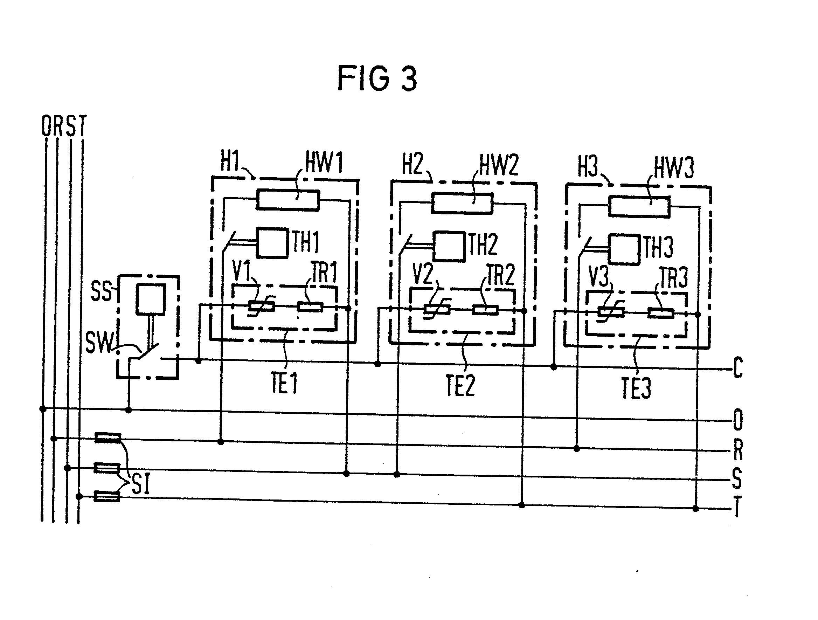

Bei dem in Fig. 3 dargestellten zweiten Schaltbild von mehreren an einem Mehrphasennetz mit Nulleiter angeschlossenen Heizgeräten H sind die Heizgeräte H für die volle Phasenspannung ausgelegt. Die Heizgeräte H werden dann zwischen den Phasen R, S oder T angeschlossen, wobei die Steuerleitung C für die Temperaturänderungswiderstände TR mit dem Nulleiter verbunden sind.

4 Patentansprüche
3 Figur

Patentansprüche

1. Schaltungsanordnung zum Steuern von Thermostaten in Heizgeräten, bei der die Heizgeräte an verschiedenen Phasen eines Mehrphasennetzes, insbesondere eines Dreiphasennetzes, anschließbar sind, bei der jeder Thermostat durch ein Temperaturänderungselement bei Stromdurchgang zusätzlich aufheizbar ist und bei der über eine gemeinsame Steuerleitung und einen gemeinsamen Schalter mindestens zwei Temperaturänderungselemente an zwei verschiedenen Phasen des Mehrphasennetzes anschließbar sind, d a - d u r c h   g e k e n n z e i c h n e t ,   daß jedes Temperaturänderungselement (TE) ein bipolares, spannungsabhängiges Element (V) enthält, das eine derartige Strom/ Spannungscharakteristik aufweist, daß der Strom durch das Temperaturänderungselement (TE) bei geöffnetem Schalter (SW) nur eine geringfügige und bei geschlossenem Schalter (SW) eine wesentliche Aufheizung des Thermostaten (TH) bewirkt.

2. Schaltungsanordnung nach Anspruch 1, d a d u r c h   g e k e n n z e i c h n e t ,   daß in Serie mit dem bipolaren spannungsabhängigen Element (V) ein Temperaturänderungswiderstand (TR) angeordnet ist.

3. Schaltungsanordnung nach Anspruch 1 oder Anspruch 2, d a d u r c h   g e k e n n z e i c h n e t ,   daß das bipolare spannungsabhängige Element (V) als Varistor ausgebildet ist.

4. Schaltungsanordnung nach Anspruch 2, d a d u r c h   g e k e n n z e i c h n e t ,   daß das bipolare spannungsabhängige Element (V) aus zwei seriengeschalteten Zenerdioden gebildet wird.

# FIG 1

# FIG 2

FIG 3

**Europäisches Patentamt**

**EUROPÄISCHER RECHERCHENBERICHT**

## EINSCHLÄGIGE DOKUMENTE

EP 84109635.7

| Kategorie | Kennzeichnung des Dokuments mit Angabe, soweit erforderlich, der maßgeblichen Teile | Betrifft Anspruch | KLASSIFIKATION DER ANMELDUNG (Int Cl.4) |
|---|---|---|---|
| D,A | <u>NO - B - 138 011</u> (NOBOE)<br>* Fig. 1,2 *<br>-- | 1 | H 05 B 1/02<br>G 05 D 23/32 |
| A | <u>DE - A - 2 050 428</u> (NOBOE)<br>* Seite 4, Zeile 8 - Seite 5, Zeile 27; Fig. 1 *<br>---- | 1 | |

RECHERCHIERTE SACHGEBIETE (Int. Cl.4)

H 05 B 1/00
G 05 D 23/00

Der vorliegende Recherchenbericht wurde für alle Patentansprüche erstellt.

| Recherchenort | Abschlußdatum der Recherche | Prüfer |
|---|---|---|
| WIEN | 23-11-1984 | TSILIDIS |